Europäisches Patentamt

(19) European Patent Office

Office européen des brevets

(11) Publication number: **0 335 532 B1**

# (12) EUROPEAN PATENT SPECIFICATION

(45) Date of publication of patent specification :
02.10.91 Bulletin 91/40

(51) Int. Cl.⁵ : **B60T 13/66, B61H 13/00**

(21) Application number : 89302607.0

(22) Date of filing : 16.03.89

(54) Electro-pneumatic brake systems.

(30) Priority : 31.03.88 GB 8807769

(43) Date of publication of application :
04.10.89 Bulletin 89/40

(45) Publication of the grant of the patent :
02.10.91 Bulletin 91/40

(84) Designated Contracting States :
CH DE ES FR IT LI SE

(56) References cited :
CH-A- 625 752
DE-B- 2 306 686

(73) Proprietor : WESTINGHOUSE BRAKE AND
SIGNAL HOLDINGS LIMITED
Pew Hill
Chippenham Wiltshire (GB)

(72) Inventor : Langley, Keith William, Mr.
11 Bennetts Road
Swainswick Bath Avon BA1 7AW (GB)

(74) Representative : MacFarlane, John Anthony
Christopher et al
PAGE & CO Temple Gate House Temple Gate
Bristol BS1 6PL (GB)

EP 0 335 532 B1

## Description

This invention relates to electro-pneumatic brake systems and, more particularly although not exclusively, to such systems for mass transit rail vehicles.

Electro-pneumatic brake systems are already known which use electro-pneumatic devices operation of which are controlled by an electrical circuit to control the pressure in a brake cylinder. Such systems use two such devices, one to effect increase of pressure in the brake cylinder and the other to effect reduction of pressure in the brake cylinder. However, by the use of only two devices, an undesirably excessive frequency of operation of the devices is necessitated in covering the whole range of required magnitudes of change of pressure in the brake cylinder (e.g. DE-A-2306686).

The present invention seeks to reduce this frequency of necessary operation of the electro-pneumatic devices by providing an electro-pneumatic brake system having electro-pneumatic devices to effect increase of, or reduction in, pressure in a brake cylinder, the devices being controlled by an electric circuit, which is characterised in that there is a pair of the brake application electro-pneumatic devices arranged in parallel with one another, and a pair of the brake-release electro-pneumatic devices arranged in parallel with one another, each of these devices being connected to the electrical circuit whereby electrical control signals can be supplied to the devices thereby to control the pneumatic throughput of the devices, one device of each pair having a larger pneumatic throughput than the other device of each pair, the pneumatic throughputs of the devices serving to determine magnitude of change of the pressure in a brake cylinder.

The electro-pneumatic devices may be connected to determine magnitude of change of the pressure in the brake cylinder via a pneumatic volume such that the throughputs of the devices determine the magnitude of change of the pneumatic pressure in the volume and hence the magnitude of change of the pressure in the brake cylinder. The volume may be connected to a relay valve that is connected for controlling supply of pressure to the brake cylinder. There may be interposed between the volume and the relay valve, a load cut-off valve whereby the pressure in the brake cylinder is limited by this load cut-off valve to a maximum pressure determined by the load of a vehicle fitted with the system. There may also be interposed between the volume and the relay valve brake emergency-application means which by-passes the electro-pneumatic devices. There may further be interposed between the electro-pneumatic devices and the volume a pressure-wave attenuator which serves to damp-out pressure waves which would otherwise occur in the volume. The volume may be connected to a transducer whereby an electrical signal indicative of the pressure in the volume can be fed back to the electrical circuit.

The electrical circuit may be such as to secure operation of that one of the appropriate pair of electro-pneumatic devices which has the smaller pneumatic throughput when a magnitude of change of brake cylinder pressure of less than a predetermined value is required and secures in addition operation of the other of the appropriate pair of electro-pneumatic devices when a magnitude of change of brake cylinder pressure of more than the predetermined value is required.

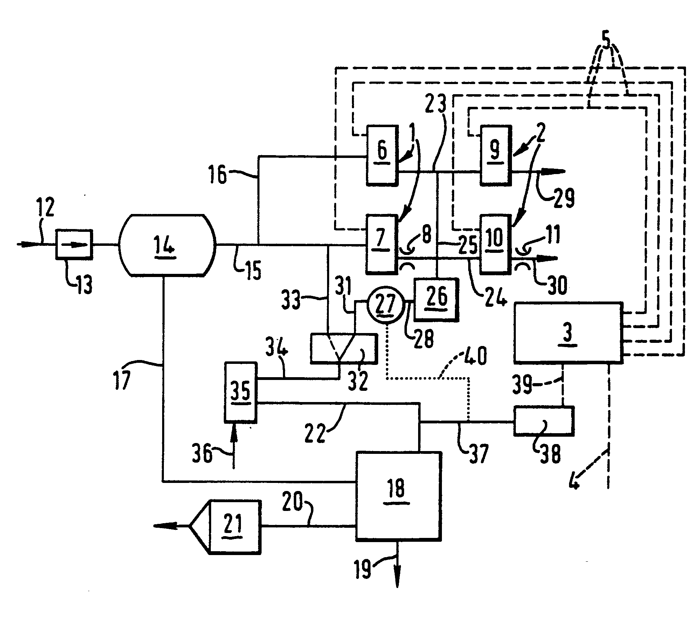

One embodiment of the present invention will now be described in greater detail, by way of example only, with reference to the accompanying drawing which is a diagrammatic representation of an electro-pneumatic brake system.

Referring to the drawing, the brake system includes two pairs of electro-pneumatic solenoid-operated valves 1 and 2 of which pair 1 are brake-application devices and pair 2 brake-release devices. Operation of the pairs 1 and 2 of devices are controlled by an electronic control unit 3. This unit 3 is fed by an input brake-demand signal over input line 4 and output signals from the unit are fed to the four devices of the pairs 1 and 2 over lines 5 of which one is connected to each of the devices.

Of the devices 6 and 7 of the pair 1, the device 6 has a larger pneumatic throughput than the output of device 7, throttled by a choke 8. Similarly, of the devices 9 and 10 of the pair 2, the device 9 has a larger pneumatic throughput than the output of device 10, throttled by a choke 11.

A source of pneumatic pressure (not shown) is fed via conduit 12 through a one way valve 13 to a brake supply reservoir 14. The reservoir 14 is connected, on the one hand, via conduits 15 and 16 to the input ports of the devices 7 and 6 respectively and, on the other hand, via conduit 17 to the input port of a relay valve 18. The relay valve 18 has an exhaust port connected to exhaust conduit 19, an output port connected via conduit 20 to a brake cylinder 21 and a control port connected to conduit 22.

The output ports of devices 6 and 7 are commoned to the input ports of devices 9 and 10 over conduits 23 and 24 which conduits are themselves commoned to a conduit 25 connected to one port of an attentuator 26 the other port of which is connected to a pilot control volume 27 over conduit 28. The output ports of the devices 9 and 10 are connected to exhaust conduits 29 and 30.

Volume 27 is also connected over conduit 31 to one input port of an emergency solenoid valve 32 the other input port of which is connected into conduit 15 via conduit 33. The output port of the valve 32 is connected via a conduit 34 to the input port of a load cut-off valve 35 controlled by an input signal 36 the value of which is indicative of the load of the vehicle in which the system is fitted. The output port of this valve 35 is connected to the conduit 22.

Branching off conduit 22 is a further conduit 37 connected to a transducer 38. The transducer 38 generates a signal indicative of the pressure fed to it over conduit 37 which signal is applied to the electronic control unit 3 over line 39. Alternatively, conduit 37 can be connected direct to volume 27 as shown by dotted line 40 in the drawing.

The system above described operates as follows:

When the system is normally-charged the reservoir 14 will be pressurised and the pressure therein applied, over conduits 15 and 16, to the brake-application devices 6 and 7 and, over conduit 17, to the relay valve 18.

The emergency solenoid valve 32 will be in its state in which, as shown by the full line traversing the valve 32, the conduit 31 will be connected (through the valve 32) to the conduit 34 and the alternative path, as shown by the dotted line traversing the valve 32, will be shut-off thus disconnecting conduit 33 from conduit 34.

If now a brake application is required, an electrical signal indicative of this and of the value of the required degree of brake application will be fed over line 4 to the electronic control unit 3.

If the demand degree of brake application is such to require an increase of pressure in the pilot control volume 27 of a magnitude of, say, more than 1 p.s.i. (6895 Pa) then the line 5 connected to the device 7 will be energised. If the demanded degree of brake application is such as to require an increase of pressure in the volume 27 of a magnitude of, say, more than 5 p.s.i. (34475 Pa) then the line 5 connected to the device 6 will also be energised. Thus, either device 7 or both of the pair of devices 1 will be operated to produce in conduit 25 a pneumatic pressure. This pressure will be supplied to the pilot control volume 27 via the attenuator 26 and conduit 28 and, from the volume 27 over conduit 31, through valve 32, conduit 34, load cut-off valve 35 and conduit 22 to the control port of relay valve 18. Appearance of pressure at this control port will operate the relay valve 18 to cause pressure supplied at its input port over conduit 17 to be applied to the brake cylinder 21 over conduit 20.

The pressure supplied to the control port of the relay valve 18 over conduit 22 will also be fed, over conduit 37, to the transducer 38 wherein it will generate an electrical signal indicative of that pressure. When this signal is indicative of a pressure corresponding to the degree of required braking indicated by the demand signal fed over line 4, the electronic control unit 3 will terminate the output signal or signals fed over line 5 and the device 7 (or pair of devices 1) will be de-energised and revert to their state in which no further pneumatic flow is allowed into conduit 25.

It has been assumed in the above description of operation that the magnitude of demanded braking effort (i.e. the magnitude of the pressure to be generated in the brake cylinder 21) does not exceed that which it is to be permitted for the loaded state of the vehicle. If, however, such an excessive magnitude of braking effort had been required, the load cut-off valve 35 would have become operative to cut-off any further increase of pressure in conduit 22 once a pressure therein indicative of the maximum magnitude of braking effort to be allowed for the state of loading of the vehicle had been reached.

In the event of a braking effort reduction being required, the demand signal fed over line 4 to the electronic control unit 3 would have so indicated. In this case, the lines 5 to the pair 2 of devices would have been suitably energised to energise either device 10 or both of the pair 2 of devices again, respectively, as to whether the required reduction of pressure in pilot control volume 27 was to be more than 1 p.s.i. (6895 Pa) or more than 5 p.s.i. (34475 Pa). Thus, similar to a brake application, either device 10 or both of the pair of devices 2 would be operated.

Thus, by means of either device 10 or both of the pair 2 of devices, the conduit 25 would be opened to exhaust and the pressure therein would drop. Consequently, the pressure in volume 27, the transducer 38 and at the control port of the relay valve 18 would, correspondingly, drop. Reduction of pressure at the control port of the relay valve 18 would reduce pressure in the brake cylinder 21 via the exhaust conduit 19. Reduction of pressure in the transducer 38 would correspondingly vary the electrical signal fed back to the unit 3 until, again, when that fed-back signal equated with the magnitude of demand braking effort, the lines 5 would be de-energised and operation of the device 10 or the pair 2 of devices would be terminated.

By providing a pair of electro-pneumatic devices for each of the brake application and brake release conditions — one of each pair of which operates at a higher throughput — a less number of device operations is required for the higher variations in magnitude of braking effort. By such lesser operation, a longer lifetime between services can be allowed and longer lifetime of the devices is achieved.

In the event of an emergency brake operation, the emergency solenoid valve 32 is operated to close the connection therethrough between conduits 31 and 34 and directly connect (over the dotted line traversing the valve 32) conduit 33 with conduit 34. Thus, full pressure from the reservoir 14 will be applied to conduit 34 and the maximum output pressure permitted by the load cut-off valve 35 in accordance with the state of loading of the vehicle will be applied on the control signal to the relay valve 18 to effect the maximum permitted braking of the vehicle.

The attenuator 26 is a wave-form attenuator which serves to damp-out pressure waves which would otherwise be generated on the volume 27 by operation of the devices 6, 7, 9 and 10.

## Claims

1. An electro-pneumatic brake system having electro-pneumatic devices (1, 2) to effect increase of, or reduction in, pressure in a brake cylinder (21), the devices (1, 2) being controlled by an electric circuit (3/4/5) ; characterised in that there is a pair of the brake application electro-pneumatic devices (6, 7) arranged in parallel with one another, and a pair of the brake-release electro-pneumatic devices (9, 10) arranged in parallel with one another, connected to the electrical circuit (3/4/5) whereby electrical control signals can be supplied to the devices thereby to control the pneumatic throughput of the devices, one device (6, 9) of each pair having a larger pneumatic throughput than the other device (7, 10) of each pair, the pneumatic throughputs of the devices serving to determine magnitude of change of the pressure in the brake cylinder (21).

2. A brake system as claimed in claim 1, wherein the electro-pneumatic devices (6, 7, 9, 10) are connected to determine magnitude of change of the pressure in the brake cylinder (21) via a pneumatic volume (27) such that the throughputs of the devices determine the magnitude of change of pneumatic pressure in the volume (27) and hence the magnitude of change of the pressure in the brake cylinder.

3. A brake system as claimed in claim 2, wherein the volume (27) is connected to a relay valve that is connected for controlling supply of pressure to the brake cylinder (21).

4. A brake system as claimed in claim 3, wherein there is interposed between the volume (27) and the relay valve (18), a load cut-off valve (35) whereby the pressure in the brake cylinder (21) is limited by the load cut-off valve (35) to a maximum pressure determined by the load of a vehicle fitted with the system.

5. A brake system as claimed in claim 3 or claim 4, wherein there is interposed between the volume (27) and the relay valve (18) brake emergency-application means (32) which by-passes the electro-pneumatic devices (6, 7, 9, 10).

6. A brake system as claimed in any one of claims 2 to 5, wherein there is interposed between the electro-pneumatic devices (6, 7, 9, 10) and the volume (27) a pressure-wave attenuator (26) which serves to damp-out pressure waves which would otherwise occur in the volume (27).

7. A brake system as claimed in any one of claims 2 to 6, wherein the volume (27) is connected to a transducer (38) whereby an electrical signal indicative of the pressure in the volume (27) can be fed back to the electrical circuit (3/4/5).

8. A brake system as claimed in any one of the preceding claims, wherein the electrical circuit (3/4/5) secures operation of that one (7 or 10) of the appropriate pair of electro-pneumatic devices (6, 7 or 9, 10) which has the smaller pneumatic throughput when a magnitude of change of brake cylinder pressure of less than a predetermined value is required and secures in addition operation of the other (6 or 9) of the appropriate pair of electro-pneumatic devices (6, 7 or 9, 10) when a magnitude of change of brake cylinder pressure of more than the predetermined value is required.

## Revendications

1. Système de freinage électro-pneumatique équipé de dispositifs électro-pneumatiques (1, 2) en vue d'augmenter ou de réduire la pression dans un maître cylindre de frein (21), ces dispositifs (1, 2) étant commandés par un circuit électrique (3/4/5) ; caractérisé en ce qu'il comporte un couple de dispositifs électro-pneumatiques d'application de frein (6, 7) disposés parallèlement l'un par rapport à l'autre, ainsi qu'un couple de dispositifs électro-pneumatiques de rappel de frein (9,10) disposés parallèlement l'un par rapport à l'autre, chaque couple étant relié à un circuit électrique (3/4/5) par lequel des signaux électriques de commande sont transmis aux dispositifs afin de réguler le débit pneumatique de ces derniers, un dispositif (6, 9) de chaque couple ayant un débit pneumatique supérieur à celui de l'autre dispositif (7, 10) du couple, les débits pneumatiques des dispositifs servant à déterminer l'amplitude de la variation de pression dans le maître cylindre de frein (21).

2. Système de freinage selon la revendication 1, caractérisé en ce que les dispositifs électro-pneumatiques (6, 7, 9, 10) sont reliés de sorte à déterminer l'amplitude de la variation de pression dans le maître cylindre (21) par l'intermédiaire d'un volume pneumatique (27) de façon que les débits des dispositifs déterminent l'amplitude de variation de pression dans le volume (27) et, par conséquent, l'amplitude de la variation de pression dans le maître cylindre.

3. Système de freinage selon la revendication 2, caractérisé en ce que le volume (27) est relié à une soupape-relais qui commande l'arrivée de la pression dans le maître cylindre (21).

4. Système de freinage selon la revendication 3, caractérisé en ce qu'entre le volume (27) et la soupape-relais (18) est interposé un limiteur de pression (35) par lequel la pression dans le maître cylindre (21) est limitée à une valeur maximum déterminée par la charge d'un véhicule équipé du système décrit.

5. Système de freinage selon la revendication 3 ou 4, caractérisé en ce qu'entre le volume (27) et la soupape-relais (18) est interposé un dispositif de freinage d'urgence (32) qui court-circuite les dispositifs électro-pneumatiques (6, 7, 9, 10).

6. Système de freinage selon l'une des revendications quelconque de 2 à 5, caractérisé en ce qu'entre les dispositifs électro-pneumatiques (6, 7, 9, 10) et le volume (27) est interposé un atténuateur d'onde de pression (26) servant à amortir les ondes de pression qui se produiraient en son absence dans le volume (27).

7. Système de freinage selon l'une des revendications quelconque de 2 à 6, caractérisé en ce que le volume (27) est relié à un transducteur (38) par lequel un signal électrique indiquant la pression dans le volume (27) peut être renvoyé vers le circuit électrique (3/4/5).

8. Système de freinage selon l'une des revendications quelconque précédentes, caractérisé en ce que le circuit électrique (3/4/5) assure le fonctionnement du dispositif (7 ou 10) du couple approprié de dispositifs électro-pneumatiques (6, 7 ou 9, 10) qui présente le plus faible débit pneumatique quand une amplitude de la variation de pression dans le maître cylindre inférieure à une valeur prédéterminée est nécessaire, ce même circuit assurant également le fonctionnement de l'autre dispositif (6 ou 9) du couple approprié de dispositifs électro-pneumatiques (6, 7 ou 9, 10) quand une amplitude de la variation de pression dans le maître cylindre supérieure à une valeur prédéterminée est nécessaire.

**Patentansprüche**

1. Elektropneumatisches Bremssystem mit elektropneumatischen Vorrichtungen (1, 2) zur Bewirkung einer Druckerhöhung oder Druckverminderung in einem Bremszylinder (21), wobei die Vorrichtungen (1,2) über einen elektrischen Schaltkreis (3, 4, 5) steuerbar sind, dadurch gekennzeichnet, daß ein Paar von elektropneumatischen Vorrichtungen (6, 7) zur Betätigung der Bremse und ein Paar von elektropneumatischen Vorrichtungen (9, 10) zum Lösen der Bremse jeweils in paralleler Anordnung zueinander angeordnet und mit dem elektrischen Schaltkreis (3, 4, 5) verbunden sind, wobei elektrische Steuersignale zur Steuerung des pneumatischen Durchsatzes der Vorrichtungen den Vorrichtungen übermittelt werden können, und wobei eine Vorrichtung (6, 9) eines jeden Paares einen größeren pneumatischen Durchsatz als die andere Vorrichtung (7, 10) jedes Paares aufweist und die pneumatischen Durchsätze der Vorrichtungen zur Festlegung der Größe der Druckänderung in dem Bremszylinder (21) dienen.

2. Bremssystem nach Anspruch 1, dadurch gekennzeichnet, daß die elektropneumatischen Vorrichtungen (6, 7, 9, 10) für die Bestimmung der Größe der Druckänderung in dem Bremszylinder (21) über ein pneumatisches Volumen (27) derart verbunden sind, daß die Durchsätze der Vorrichtungen die Größe der Druckänderung des pneumatischen Druckes in dem Volumen (27) und damit die Größe der Druckänderung in dem Bremszylinder bestimmen.

3. Bremssystem nach Anspruch 2, dadurch gekennzeichnet, daß das Volumen (27) mit einem Relais-Ventil verbunden ist, welches seinerseits zur Steuerung der Druckversorgung des Bremszylinders (21) eingerichtet ist.

4. Bremssystem nach Anspruch 3, dadurch gekennzeichnet, daß zwischen dem Volumen (27) und dem Relais-Ventil (18) ein Belastungs-Begrenzungsventil (3S) angeordnet ist, mittels dessen der Druck in dem Bremszylinder (21) auf einen maximalen durch die Belastung des mit dem System ausgerüsteten Fahrzeuges bestimmten Druck begrenzt ist.

5. Bremssystem nach Anspruch 3 oder 4, dadurch gekennzeichnet, daß zwischen dem Volumen (27) und dem Relais-Ventil (18) Brems-Notbetätigungs-Mittel (32) angeordnet sind, welche im Bypaß zu den elektropneumatischen Vorrichtungen (6, 7, 9, 10) angeordnet sind.

6. Bremssystem nach wenigstens einem der Ansprüche 2 bis 5, dadurch gekennzeichnet, daß zwischen den elektropneumatischen Vorrichtungen (6, 7, 9, 10) und dem Volumen (27) ein Druckwellen-Dämpfungsglied (26) angeordnet ist, um gegebenenfalls in dem Volumen (27) auftretende Druckwellen zu dämpfen.

7. Bremssystem nach wenigstens einem der Ansprüche 2 bis 6, dadurch gekennzeichnet, daß das Volumen (27) mit einem Wandler (38) verbunden ist, mittels dessen ein elektrisches, den in dem Volumen (27) herrschenden Druck anzeigendes Signal in den elektrischen Schaltkreis (3, 4, 5) rückgeführt werden kann.

8. Bremssystem nach wenigstens einem der vorangehenden Ansprüche, dadurch gekennzeichnet, daß der elektrische Schaltkreis (3, 4, 5) die Betätigung der einen Vorrichtung (7 oder 10) des geeigneten Paares von elektropneumatischen Vorrichtungen (6, 7 oder 9, 10) bewirkt, welche den kleineren pneumatischen Durchsatz aufweist, wenn eine geringere Größe einer Druckänderung als ein vorgegebener Wert in dem Bremszylinder benötigt ist, und welche zusätzlich die Betätigung der anderen Vorrichtung (6 oder 9) des geeigneten Paares von elektropneumatischen Vorrichtungen (6, 7 oder 9, 10) bewirkt, wenn eine größere Druckänderung als der vorgegebene Wert in dem Bremszylinder benötigt ist.